# EUROPÄISCHE PATENTSCHRIFT

(11) **EP 3 921 180 B1**
(45) Veröffentlichungstag und Bekanntmachung des Hinweises auf die Patenterteilung: **26.02.2025**
(21) Anmeldenummer: 20704203.7
(22) Anmeldetag: 30.01.2020
(51) Int. Cl.: B60B 3/14

(54) **SPURVERBREITERUNGSSCHEIBE FÜR KRAFTFAHRZEUGE**
WHEEL SPACER DISC FOR MOTOR VEHICLES
DISQUE ÉLARGISSEUR DE VOIE POUR VÉHICULES À MOTEUR

(30) Priorität: 08.02.2019 DE 202019100727 U
(43) Veröffentlichungstag der Anmeldung: 15.12.2021
(60) Teilanmeldung: 24212920.3
(73) Patentinhaber: Wohlfarth, Klaus, 74427 Fichtenberg (DE)
(72) Erfinder: SIMONJAN, Edgar, 74541 Vellberg (DE)
(74) Vertreter: Patentanwälte Ruff, Wilhelm, Beier, Dauster & Partner mbB
(86) Internationale Anmeldenummer: PCT/EP2020/052253
(87) Internationale Veröffentlichungsnummer: WO 2020/160990

(56) Entgegenhaltungen:
- EP-A2- 1 500 524
- DE-A1- 102014 215 986
- DE-A1- 19 507 773
- DE-A1- 19 608 601
- DE-A1- 19 940 524
- DE-C2- 19 940 524
- DE-U1- 29 915 048
- DE-U1- 9 307 180
- US-A1- 2002 190 570

## Beschreibung

Die Erfindung betrifft eine Spurverbreiterungsscheibe für Kraftfahrzeuge mit einer Mittelöffnung, mehreren Radschraubenöffnungen und zumindest zwei Radnabenzentrierelementen zum Zentrieren der Spurverbreiterungsscheibe relativ zu einer Radnabe. Die Erfindung betrifft weiter eine Anordnung mit einer Radnabe, einer Spurverbreiterungsscheibe und einer Felge für Kraftfahrzeuge.

Aus der deutschen Offenlegungsschrift DE 195 07 773 A1 ist eine Spurverbreiterungsscheibe für Kraftfahrzeuge mit einer Mittelöffnung, mehreren Radschraubenöffnungen und mehreren Radnabenzentrierelementen zum Zentrieren der Spurverbreiterungsscheibe relativ zu einer Radnabe bekannt. Der Durchmesser der Mittelöffnung ist größer als ein Durchmesser eines Zentrierelements der Radnabe. Es sind mehrere Felgenzentrierzapfen zum Zentrieren der Spurverbreiterungsscheibe relativ zu einer Felge vorgesehen. Die Radnabenzentrierelemente sind an einer umlaufenden Wand der Mittelöffnung angeordnet und ragen abschnittsweise in die Mittelöffnung der Spurverbreiterungsscheibe hinein.

Aus der deutschen Gebrauchsmusterschrift DE 299 15 048 U1 ist eine Spurverbreiterungsscheibe für Kraftfahrzeuge bekannt, die eine ebene Spurverbreiterungsscheibe mit Mittelöffnung und einen separaten, in die Mittelöffnung einsetzbaren Ring aufweist. Der Ring ist mit Abschrägungen und zylindrischen Abschnitten zum Aufnehmen einer Radnabe bzw. einer Felge versehen.

Die europäische Offenlegungsschrift EP 1 500 524 A2 zeigt eine Radnabenanordnung. An der Radnabe sind insgesamt vier Felgenzentrierzapfen vorgesehen. An dem äußeren Rand dieser Felgenzentrierzapfen kann eine Mittenöffnung einer Felge anliegen, um dadurch die Felge relativ zur Radnabe zu zentrieren.

### AUFGABE UND LÖSUNG

Der Erfindung liegt die Aufgabe zugrunde, eine Zentrierung einer vergleichsweise dünnen Spurverbreiterungsscheibe für Kraftfahrzeuge auf einer Radnabe zu verbessern.

Zur Lösung der Aufgabe ist erfindungsgemäß eine Spurverbreiterungsscheibe für Kraftfahrzeuge mit den Merkmalen von Anspruch 1 und eine Anordnung mit einer Radnabe, der Spurverbreiterungsscheibe für Kraftfahrzeuge und einer Felge nach Anspruch 10 vorgesehen. Weiterbildungen sind in den Unteransprüchen 2 bis 9 sowie 11 bis 13 angegeben.

Gemäß der Erfindung ist eine Spurverbreiterungsscheibe für Kraftfahrzeuge mit einer Mittelöffnung, mit mehreren Radschraubenöffnungen und mit zumindest zwei Radnabenzentrierelementen zum Zentrieren der Spurverbreiterungsscheibe relativ zu einer Radnabe vorgesehen, wobei ein Durchmesser der Mittelöffnung größer ist als ein Durchmesser eines Zentrierelements der Radnabe, wobei zumindest zwei Felgenzentrierzapfen zum Zentrieren der Spurverbreiterungsscheibe relativ zu einer Felge vorgesehen sind, wobei die zumindest zwei Radnabenzentrierelemente an einer umlaufenden Wandung der Mittelöffnung angeordnet sind, wobei die zumindest zwei Radnabenzentrierelemente zumindest abschnittsweise in die Mittelöffnung der Spurverbreiterungsscheibe hineinragen.

Eine Spurverbreiterungsscheibe, auch Distanzscheibe genannt, ist im Sinne der Erfindung eine Scheibe, die dazu dient, eine Spurverbreiterung an einem Kraftfahrzeug und somit eine Vergrößerung einer Spurweite des Kraftfahrzeugs zu erreichen. Die Spurverbreiterungsscheibe kann unterschiedliche Ausgestaltungen aufweisen. Besonders vorteilhaft ist eine Ausgestaltung der Spurverbreiterungsscheibe in Ringform, wobei Elemente der Spurverbreiterungsscheibe möglichst symmetrisch um eine Mittellängsachse der Spurverbreiterungsscheibe angeordnet sind. Eine symmetrische Ausgestaltung der Spurverbreiterungsscheibe ist besonders vorteilhaft im Hinblick auf eine Massenverteilung um eine Drehachse, die im Idealfall der Mittellängsachse der Spurverbreiterungsscheibe entspricht, um eine mögliche Unwucht während eines Drehens der Spurverbreiterungsscheibe zu vermeiden.

Unter der Mittelöffnung ist eine Ausnehmung zu verstehen, die sich entlang der Mittellängsachse der Spurverbreiterungsscheibe durch die Spurverbreiterungsscheibe hindurch erstreckt und ein Zentrierelement der Radnabe zumindest abschnittsweise dadurch aufnehmen kann, dass das Zentrierelement der Radnabe in die Mittelöffnung hineinragt oder durch die Mittelöffnung hindurchragt. In einer bevorzugten Ausgestaltung ist die Mittelöffnung zentrisch auf der Spurverbreiterungsscheibe angeordnet. Die Mittelöffnung weist eine umlaufende Wandung auf, die entlang der Mittelängsachse der Spurverbreiterungsscheibe eine Höhe aufweist, die wiederum einer Dicke der Spurverbreiterungsscheibe entspricht.

Die Spurverbreiterungsscheibe weist weiter mehrere Radschraubenöffnungen, insbesondere fünf Radschraubenöffnungen, auf. Die Radschraubenöffnungen sind als Durchgangsbohrungen ausgeführt. Die Radschraubenöffnungen liegen auf einem Durchmesser, der größer ist als ein Durchmesser der Mittelöffnung. Außerdem ist der Durchmesser, auf dem die Radschraubenöffnungen liegen, kleiner als ein Außendurchmesser der Spurverbreiterungsscheibe selbst. Es sind mehrere Radschraubenöffnungen, beispielsweise drei Radschraubenöffnungen, vorgesehen. Vorteilhaft sind vier oder mehr Radschraubenöffnungen vorgesehen. In einer bevorzugten Ausgestaltung sind fünf Radschraubenöffnungen vorgesehen.

Die Spurverbreiterungsscheibe weist weiter zumindest zwei Radnabenzentrierelemente zum Zentrieren der Spurverbreiterungsscheibe relativ zu der Radnabe auf. Voraussetzung zum Zentrieren der Spurverbreiterungsscheibe relativ zu der Radnabe ist, dass ein Durchmesser der Mittelöffnung größer ist als ein Durchmesser des Zentrierelements der Radnabe, da die Spurverbreiterungsscheibe sonst nicht über die Zentriervorsprünge der Radnabe geschoben werden kann. Die zumindest zwei Radnabenzentrierelemente sind in einer bevorzugten Ausführungsform an der umlaufenden Wandung der Mittelöffnung angeordnet und ragen zumindest abschnittsweise in die Mittelöffnung der Spurverbreiterungsscheibe hinein. Somit kann beim Aufschieben der Spurverbreiterungsscheibe auf die Radnabe und somit auf das Zentrierelement der Radnabe durch die zumindest zwei Radnabenzentrierelemente eine Zentrierung der Spurverbreiterungsscheibe relativ zu der Radnabe erreicht werden. Dazu ist es besonders vorteilhaft, dass die zumindest zwei Radnabenzentrierelemente im Wesentlichen gegenüberliegend und/oder gleichmäßig voneinander beabstandet an der umlaufenden Wandung der Mittelöffnung angeordnet sind, um die Zentrierung der der Spurverbreiterungsscheibe relativ zu der Radnabe möglichst einfach, sicher und spielfrei zu gewährleisten. Es kann beispielsweise auch nur ein Radnabenzentrierelement vorgesehen sein. Dann dient auf der einen Seite das Radnabenzentrierelement und auf einer im Wesentlichen gegenüberliegenden Seite an der umlaufenden Wandung der Mittelöffnung die umlaufende Wandung der Mittelöffnung selbst zum Zentrieren der Spurverbreiterungsscheibe relativ zu der Radnabe. Bevorzugt geschieht die Zentrierung der Spurverbreiterungsscheibe relativ zu der Radnabe jedoch über die zumindest zwei Radnabenzentrierelemente, die im Wesentlichen gegenüberliegend und/oder gleichmäßig beabstandet an der umlaufenden Wandung der Mittelöffnung angeordnet sind.

Die Spurverbreiterungsscheibe weist zumindest zwei Felgenzentrierzapfen auf. Die zumindest zwei Felgenzentrierzapfen sind geeignet, die Felge relativ zu der Spurverbreiterungsscheibe zu zentrieren. Dabei sind die zumindest zwei Felgenzentrierzapfen so angeordnet, dass sie auf einer gedachten Kreislinie mit einem Außendurchmesser liegen, der einem Zentrierdurchmesser der Felge entspricht oder nur geringfügig kleiner ist als der Zentrierdurchmesser. Dazu weist die Felge vorteilhaft ein Zentrierelement auf, das den Zentrierdurchmesser der Felge aufweist und auf die zumindest zwei Felgenzentrierelemente aufschiebbar ist. Dadurch ist die Felge relativ zu der Spurverbreiterungsscheibe zennerar. Tatsächlich Kann das Zentrierelement der Felge als kreiszylindrische Mittelbohrung ausgebildet sein.

Gemäß der Erfindung ist vorgesehen, dass die zumindest zwei Felgenzentrierzapfen an der umlaufenden Wandung der Mittelöffnung angeordnet sind und dass die zumindest zwei Felgenzentrierzapfen zumindest abschnittsweise in die Mittelöffnung der Spurverbreiterungsscheibe hineinragen und sich entlang einer Mittellängsachse der Spurverbreiterungsscheibe von der Spurverbreiterungsscheibe weg erstrecken.

Besonders vorteilhaft sind die zumindest zwei Felgenzentrierzapfen im Wesentlichen gegenüberliegend und/oder gleichmäßig voneinander beabstandet an der umlaufenden Wandung der Mittelöffnung angeordnet, um eine sichere und einfache Zentrierung der Spurverbreiterungsscheibe relativ zu der Felge zu erreichen. Damit die zumindest zwei Felgenzentrierzapfen ausreichend stabil ausgebildet sein können, ragen diese vorteilhaft in die Mittelöffnung der Spurverbreiterungsscheibe hinein. Eine solche Anordnung ergibt sich daraus, dass die Mittelöffnung einen größeren Durchmesser aufweisen muss als das Zentrierelement der Radnabe, die zumindest zwei Felgenzentrierzapfen jedoch auf einem gedachten Kreis mit kleinerem oder zumindest gleich großem Außendurchmesser als bzw. wie der Durchmesser der Mittelöffnung der Spurverbreiterungsscheibe liegen müssen, der dem Zentrierdurchmesser der Felge entspricht. Dadurch erstrecken sich die zumindest zwei Felgenzentrierzapfen zumindest abschnittsweise radial zu der Mittellängsachse der Spurverbreiterungsscheibe in die Mittelöffnung bzw. in eine Projektion der Mittelöffnung hinein.

Die zwei Felgenzentrierzapfen erstrecken sich entlang der Mittellängsachse der Spurverbreiterungsscheibe von der Spurverbreiterungsscheibe weg. Besonders vorteilhaft ergibt sich durch eine lange Ausgestaltung der zumindest zwei Felgenzentrierzapfen eine bessere Führung des Zentrierelements der Felge relativ zu der Spurverbreiterungsscheibe und somit eine bessere, einfachere und sicherere Zentrierung der Felge relativ zu der Spurverbreiterungsscheibe. Die Felgenzentrierzapfen können mindestens doppelt so lang sein wie die Spurverbreiterungsscheibe dick ist.

In Weiterbildung der Erfindung kann vorgesehen sein, dass jeweils ein Felgenzentrierzapfen und ein Radnabenzentrierelement in Richtung der Mittellängsachse der Spurverbreiterungsscheibe gesehen im Wesentlichen hintereinander angeordnet sind.

Im Wesentlichen hintereinander angeordnet bedeutet, dass in Richtung der Mittellängsachse gesehen, ein Felgenzentrierzapfen auf ein Radnabenzentrierelement folgt. Mit anderen Worten sind ein Felgenzentrierzapfen und ein Radnabenzentrierelement nicht vollständig versetzt zueinander. Die Felgenzentrierzapfen können in einer Umfangsrichtung um die Mittellängsachse der Spurverbreiterungsscheibe aber breiter oder schmäler ausgeführt sein als die Radnabenzentrierelemente. In einer bevorzugten Ausführungsform sind die Felgenzentrierzapfen in Umfangsrichtung um die Mittellängsachse der Spurverbreiterungsscheibe gesehen jedoch im Wesentlichen gleich breit ausgeführt wie die Radnabenzentrierelemente.

Besonders vorteilhaft sind die Felgenzentrierzapfen und die Radnabenzentrierelemente möglichst breit in Umfangsrichtung um die Mittellängsachse ausgeführt, um eine sichere und einfache Zentrierung der Felge relativ zu der Spurverbreiterungsscheibe mittels der Felgenzentrierelemente und der Spurverbreiterungsscheibe relativ zu der Radnabe mittels der Radnabenzentrierelemente zu erreichen. Dazu weisen die zumindest zwei Felgenzentrierzapfen möglichst große, insbesondere konvex gekrümmte, Felgenzentrierflächen und die Radnabenzentrierelemente möglichst große, insbesondere konkav gekrümmte, Radnabenzentrierflächen auf.

In Weiterbildung der Erfindung kann vorgesehen sein, dass die zumindest zwei Radnabenzentrierelemente und die zumindest zwei Felgenzentrierzapfen einstückig mit der Spurverbreiterungsscheibe ausgebildet sind.

In einer bevorzugten Ausführungsform sind die zumindest zwei Radnabenzentrierelemente und die zumindest zwei Felgenzentrierzapfen einstückig und somit auch aus dem gleichen Material wie die Spurverbreiterungsscheibe ausgebildet. Die Spurverbreiterungsscheibe besteht beispielsweise aus Aluminium oder einem sonstigen vergleichsweise leichten und dennoch robusten Material.

In Weiterbildung der Erfindung kann vorgesehen sein, dass die zumindest zwei Radnabenzentrierelemente und die zumindest zwei Felgenzentrierzapfen als separates Bauteil ausgebildet sind.

In einer weiteren Ausführungsform ist ein von der Spurverbreiterungsscheibe separates Bauteil mit zumindest zwei Felgenzentrierzapfen und zumindest zwei Radnabenzentrierelementen vorgesehen, das in eine Mittelöffnung der Spurverbreiterungsscheibe eingesetzt werden kann. Die Mittelöffnung hat dann einen größeren Durchmesser als ein Außendurchmesser des Zentrierelements. Beispielsweise ist das separate Bauteil ein aus Kunststoff ausgebildeter Ring, der mittels einer Rasteinrichtung an der umlaufenden Wandung der Mittelöffnung der Spurverbreiterungsscheibe befestigbar ist. Dieser Ring weist die Radnabenzentrierelemente auf, die sich in montiertem Zustand zu der Mittellängsachse der Spurverbreiterungsscheibe hin erstrecken und die Zentrierung der Spurverbreiterungsscheibe relativ zu der Radnabe sicherstellen. Der Ring weist weiter die Felgenzentrierzapfen auf, die in montiertem Zustand jeweils entlang der Mittellängsachse der Spurverbreiterungsscheibe vor oder hinter den zumindest zwei Radnabenzentrierelementen angeordnet sind, sich entlang der Mittellängsachse der Spurverbreiterungsscheibe von eben dieser weg erstrecken und die Zentrierung der Spurverbreiterungsscheibe relativ zu der Felge sicherstellen. Dieses separate Bauteil mit den zumindest zwei Felgenzentrierzapfen und den zumindest zwei Radnabenzentrierelementen kann beispielsweise auch aus einem kunststoffähnlichem Material oder einem sonstigen geeigneten Material ausgebildet sein.

In Weiterbildung der Erfindung kann vorgesehen sein, dass zumindest drei Felgenzentrierzapfen vorgesehen sind.

In Weiterbildung der Erfindung kann vorgesehen sein, dass die zumindest drei Felgenzentrierzapfen entlang eines Umfangs der Mittelöffnung in gleichen Abständen verteilt angeordnet sind und dass insbesondere die drei Felgenzentrierzapfen um 120° versetzt zueinander angeordnet sind.

Besonders vorteilhaft sind die drei Felgenzentrierzapfen so angeordnet, dass eine sichere und einfache Zentrierung der Felge auf der Spurverbreiterungsscheibe durch die zumindest drei Felgenzentrierzapfen ermöglicht ist. Dazu können die Felgenzentrierzapfen an den Felgenzentrierflächen gekrümmt ausgebildet sein.

In Weiterbildung der Erfindung kann vorgesehen sein, dass die Spurverbreiterungsscheibe zumindest drei Radnabenzentrierelemente aufweist.

Durch zumindest drei Radnabenzentrierelemente ist eine bessere und einfachere Zentrierung der Spurverbreiterungsscheibe auf dem Zentrierelement der Radnabe gewährleistet, sofern die zumindest drei Radnabenzentrierelemente in gleichmäßigem und/oder möglichst großem Abstand zueinander an der umlaufenden Wandung der Mittelöffnung angeordnet sind. In einer bevorzugten Ausführungsform sind die zumindest drei Radnabenzentrierelemente entlang der Mittelängsachse hinter den zumindest drei Felgenzentrierzapfen angeordnet, wobei die zumindest drei Felgenzentrierzapfen um 120° versetzt zueinander entlang eines Umfangs der Mittelöffnung in gleichen Abständen verteilt angeordnet sind.

In Weiterbildung der Erfindung kann vorgesehen sein, dass die umlaufende Wandung parallel zu der Mittellängsachse der Spurverbreiterungsscheibe ausgerichtet ist.

Während die umlaufende Wandung zumindest im Wesentlichen parallel zu der Mittellängsachse der Spurverbreiterungsscheibe ausgerichtet ist, können die auf der umlaufenden Wandung angeordneten zumindest zwei oder zumindest drei Radnabenzentrierelemente hin zu der Mittellängsachse und in einer gleichen Richtung, in der sich auch die zumindest zwei oder zumindest drei Felgenzentrierzapfen erstrecken, leicht konisch zulaufen, um Toleranzen beim Aufschieben der Spurverbreiterungsscheibe auf das Zentrierelement der Radnabe ausgleichen zu können. Die zumindest zwei oder zumindest drei Radnabenzentrierelemente verjüngen sich somit in die gleiche Richtung, in der sich auch die zumindest zwei oder zumindest drei Felgenzentrierzapfen erstrecken, so dass je weiter die Spurverbreiterungsscheibe auf das Zentrierelement der Radnabe geschoben ist, eine stärkere Zentrierung der Spurverbreiterungsscheibe auf dem Zentrierelement der Radnabe erreicht wird.

Eine solche Ausbildung lässt sich auch auf die Felgenzentrierzapfen übertragen, so dass die Felgenzentrierflächen der Felgenzentrierzapfen in eine Richtung von der Spurverbreiterungsscheibe weg und parallel zur Mittellängsachse der Spurverbreiterungsscheibe konisch in Richtung auf die Mittellängsachse zulaufen können, um eine möglichst spielfreie und sichere Zentrierung der Felge relativ zu der Spurverbreiterungsscheibe zu erreichen. Je weiter dann die Felge auf die zumindest zwei oder zumindest drei Felgenzentrierzapfen der Spurverbreiterungsscheibe aufgeschoben wird, desto besser zentriert sich die Felge auf der Spurverbreiterungsscheibe.

Es kann damit erreicht werden, dass Toleranzen, insbesondere Fertigungstoleranzen, bei einer Montage der Felge auf der Spurverbreiterungsscheibe und eben dieser auf der Radnabe ausgeglichen werden und die Felge immer spielfrei auf der Spurverbreiterungsscheibe und die Spurverbreiterungsscheibe immer spielfrei auf dem Zentrierelement der Radnabe sitzt.

In Weiterbildung der Erfindung kann vorgesehen sein, dass die mehreren Radschraubenöffnungen als Langlöcher, insbesondere als gekrümmte Langlöcher, ausgebildet sind.

Durch die Ausbildung der mehreren Radschraubenöffnungen als Langlöcher kann nicht nur eine Toleranz eines Lochbilds von mehreren Radschraubenöffnungen der Radnabe und von mehreren Radschraubenöffnungen der Felge mittels der Langlöcher der Radschraubenöffnungen der Spurverbreiterungsscheibe ausgeglichen werden sondern die Spurverbreiterungsscheibe kann auch für unterschiedliche Fahrzeuge mit unterschiedlichen Lochbildern oder Bolzenbildern eingesetzt werden. Durch eine gekrümmte Ausgestaltung der Langlöcher ist sichergestellt, dass beim Einsetzen einer Radschraube ein Abstand der Mittellängsachse der Spurverbreiterungsscheibe zu einer Mittellängsachse der Radschraube in jeder Position der Radschraube in dem gekrümmten Langloch gleich ist.

In Weiterbildung der Erfindung kann vorgesehen sein, dass die Spurverbreiterungsscheibe eine Dicke entlang der Mittellängsachse der Spurverbreiterungsscheibe aufweist, die kleiner als 15 mm, insbesondere 2 mm, insbesondere 3 mm, 5 mm, 8 mm oder 10 mm, insbesondere zwischen 2 mm und 15 mm, ist.

Besonders bevorzugt ist die Spurverbreiterungsscheibe als dünne Spurverbreiterungsscheibe ausgebildet, die sich von dicken Spurverbreiterungsscheiben insofern unterscheidet, dass die Spurverbreiterungsscheibe eine Dicke entlang der Mittellängsachse von 2 mm bis 15 mm aufweist. Besonders bevorzugt sind dünne Spurverbreiterungsscheiben die eine Dicke entlang der Mittellängsachse der Spurverbreiterungsscheibe von 3 mm, 5 mm, 8 mm oder 10 mm aufweisen.

Gemäß der Erfindung ist am Übergang zwischen einer radial außen liegenden Außenfläche der Felgenzentrierzapfen und einer Scheibenfläche der Spurverbreiterungsscheibe jeweils eine Abschrägung vorgesehen.

Mittels einer Abschrägung oder Fase zwischen der radial außen liegenden Außenseite der Felgenzentrierzapfen und der Scheibenfläche der Spurverbreiterungsscheibe kann eine Stabilisierung der Felgenzentrierzapfen erzielt werden. An der Scheibenfläche liegt im montierten Zustand der Spurverbreiterungsscheibe die Felge an und die radial außen liegende Außenseite der Felgenzentrierzapfen liegt an einer Mittelbohrung der Felge an. Am Übergang zwischen der Mittelbohrung der Felge und einer Anlagefläche der Felge ist in der Regel ebenfalls eine Abschrägung vorgesehen. Es ist daher im montierten Zustand ausreichend Platz vorhanden, um eine Abschrägung oder Fase zwischen dem Felgenzentrierzapfen und der Scheibenfläche vorzusehen.

Gemäß der Erfindung ist ein die Mittelöffnung umgebender und an die Mittelöffnung angrenzender Ringvorsprung vorgesehen, der in die Abschrägungen der Felgenzentrierzapfen übergeht.

Auf diese Weise können die Abschrägungen oder Fasen an der radial außen liegenden Außenseite der Felgenzentrierzapfen um die gesamte Mittelöffnung herum fortgesetzt werden. Mittels eines solchen Ringvorsprungs, der um die gesamte Mittelöffnung umläuft, kann die Spurverbreiterungsscheibe insgesamt versteift werden. Dies kann insbesondere dann von Vorteil sein, wenn sehr dünne Spurverbreiterungsscheiben mit einer Dicke von nur wenigen Millimetern eingesetzt werden.

Gemäß der Erfindung ist auch eine Anordnung mit einer Radnabe, einer erfindungsgemäßen Spurverbreiterungsscheibe und einer Felge für Kraftfahrzeuge vorgesehen, wobei die Radnabe ein Zentrierelement aufweist, das sich von der Radnabe aus entlang einer Mittellängsachse der Radnabe erstreckt, wobei das Zentrierelement einen Zentrierring und zumindest zwei Zentriervorsprünge aufweist, wobei der Zentrierring auf gleicher Höhe wie eine Anlagefläche der Radnabe für die Spurverbreiterungsscheibe beginnt, sich von der Anlagefläche entlang der Mittellängsachse weg erstreckt und relativ zu der Mittellängsachse der Radnabe zentriert ist, wobei sich die zumindest zwei Zentriervorsprünge aus dem Zentrierring im Wesentlichen parallel zu der Mittellängsachse der Radnabe erstrecken, wobei das Zentrierelement an den zumindest zwei Zentriervorsprüngen einen größeren Durchmesser aufweist als an dem Zentrierring, wobei die Spurverbreiterungsscheibe relativ zu der Radnabe zentriert ist, wobei die Felge relativ zu der Spurverbreiterungsscheibe zentriert ist, wobei die mehreren Radschraubenöffnungen der Spurverbreiterungsscheibe fluchtend zu mehreren Radschraubenöffnungen der Felge und mehreren Radschraubenöffnungen oder Stehbolzen der Radnabe ausgerichtet sind, wobei die zumindest zwei Felgenzentrierzapfen zwischen den zumindest zwei Zentriervorsprüngen angeordnet sind und die Spurverbreiterungsscheibe mittels der zumindest zwei Radnabenzentrierelemente an dem Zentrierring anliegt.

Das Zentrierelement der Radnabe weist an den zumindest zwei Zentriervorsprüngen einen größeren Durchmesser auf als der Zentrierring, der auf gleicher Höhe wie die Anlagefläche der Radnabe für die Spurverbreiterungsscheibe beginnt und sich entlang der Mittellängsachse der Radnabe von der Anlagefläche der Radnabe weg erstreckt. Um eine Zentrierung der Spurverbreiterungsscheibe relativ zu der Radnabe mittels des Zentrierrings des Zentrierelements der Radnabe und den zumindest zwei Radnabenzentrierelementen der Spurverbreiterungsscheibe zu erreichen, definieren die Radnabenzentrierelemente der Spurverbreiterungsscheibe Abschnitte eines gedachten Kreises mit einem Innendurchmesser, der einem Außendurchmesser des Zentrierrings des Zentrierelements der Radnabe entspricht oder nur geringfügig größer ist. Um eine Radnabenanlagefläche der Spurverbreiterungsscheibe während eines Montageprozesses über das Zentrierelement der Radnabe in Anlage mit der Anlagefläche der Radnabe bringen zu können, ist der Durchmesser der Mittelöffnung der Spurverbreiterungsscheibe größer als der Außendurchmesser des Zentrierelements der Radnabe an den zumindest zwei Zentriervorsprüngen ausgeführt. Somit ist während des Montierens der Spurverbreiterungsscheibe auf der Radnabe darauf Acht zu geben, dass die Radnabenzentrierelemente und somit auch die entlang der Mittellängsachse der Spurverbreiterungsscheibe im Wesentlichen hinter den Radnabenzentrierelementen angeordneten Felgenzentrierzapfen zwischen den zumindest zwei Zentriervorsprüngen des Zentrierelements der Radnabe mit der Radnabe in Anlage zu bringen sind. In einem montierten Zustand der Spurverbreiterungsscheibe auf der Radnabe ist die Spurverbreiterungsscheibe somit mittels der zumindest zwei Radnabenzentrierelemente relativ zu dem Zentrierelement der Radnabe zentriert. Die Zentrierung der Spurverbreiterungsscheibe auf der Radnabe erfolgt mittels der Radnabenzentrierflächen der Radnabenzentrierelemente, die an dem Zentrierring der Merkmale anliegen. Weiter liegen die Anlagefläche der Radnabe und die Radnabenanlagefläche der Spurverbreiterungsscheibe aneinander an.

In Weiterbildung der Erfindung kann vorgesehen sein, dass das Zentrierelement zumindest drei Zentriervorsprünge aufweist, die sich über einen Umfang einer Mittelöffnung der Radnabe, insbesondere um 120° versetzt, in gleichen Abständen verteilt aus dem Zentrierring erstrecken.

Die drei Zentriervorsprünge sind so angeordnet, dass bei einer Montage der Felge auf der Radnabe ohne die Spurverbreiterungsscheibe eine sichere und einfache Zentrierung der Felge auf der Radnabe durch die zumindest drei Zentriervorsprünge ermöglicht ist. Damit die dünne Spurverbreiterungsscheibe, die die ursprünglich für die Felge vorgesehenen Zentriervorsprünge überbrückt, auf der Radnabe zentriert werden kann, sind die Radnabenzentrierelemente der Spurverbreiterungsscheibe vorgesehen, die an dem Zentrierring der Radnabe anliegen.

In Weiterbildung der Erfindung kann vorgesehen sein, dass die mehreren Felgenzentrierzapfen, insbesondere drei Felgenzentrierzapfen, zwischen den mehreren Zentriervorsprüngen angeordnet sind.

In einer bevorzugten Ausführungsform sind die mehreren Felgenzentrierzapfen zwischen den mehreren Zentriervorsprüngen angeordnet. Die mehreren Felgenzentrierzapfen sind deshalb zwischen den mehreren Zentriervorsprüngen angeordnet, da sie von der umlaufenden Wandung der Mittelöffnung der Spurverbreiterungsscheibe in die Mittelöffnung hineinragen und somit einen kleineren Innendurchmesser der Mittelöffnung der Spurverbreiterungsscheibe bilden als der Außendurchmesser des Zentrierelements an den mehreren Zentriervorsprüngen. Somit ist ein Inanlagebringen der Radnabenanlagefläche der Spurverbreiterungsscheibe mit der Anlagefläche der Radnabe nur in einer Ausrichtung möglich, in der die mehreren Felgenzentrierzapfen zwischen den mehreren Zentriervorsprüngen angeordnet sind. Gleiches gilt für die mehreren Radnabenzentrierelemente, die in Richtung zu der Mittellängsachse der Spurverbreiterungsscheibe gesehen im Wesentlichen hinter den mehreren Felgenzentrierzapfen angeordnet sind. Auch die mehreren Radnabenzentrierelemente verringern den Durchmesser der Mittelöffnung der Spurverbreiterungsscheibe dahingehend, dass ein Inanlagebringen der Radnabenanlagefläche der Spurverbreiterungsscheibe mit der Anlagefläche der Radnaben nur in einer Ausrichtung möglich ist, in der die mehreren Radnabenzentrierelemente und somit auch die mehreren Felgenzentrierzapfen zwischen den mehreren Zentriervorsprüngen angeordnet sind. Dabei liegen die mehreren Radnabenzentrierelemente an dem Zentrierring des Zentrierelements der Radnabe an und zentrieren die Spurverbreiterungsscheibe relativ zu der Radnabe.

Besonders vorteilhaft ist es durch diese Anordnung ermöglicht, besonders dünne Spurverbreiterungsscheiben zu montieren, die die ursprünglich für die Felge vorgesehenen Zentriervorsprünge der Radnabe nicht in einer Höhe von der Anlagefläche der Radnabe entlang der Mittellängsachse der Radnabe überragen und die somit nicht an den ursprünglich für die Felge vorgesehenen Zentriervorsprüngen der Radnabe zentriert werden können.

In Weiterbildung der Erfindung kann vorgesehen sein, dass die zumindest zwei Felgenzentrierzapfen der Spurverbreiterungsscheibe über die zumindest zwei Zentriervorsprünge des Zentrierelements der Radnabe entlang der Mittellängsachse der Radnabe hinausragen.

Indem die Felgenzentrierzapfen der Spurverbreiterungsscheibe im montierten Zustand die Zentriervorsprünge des Zentrierelements der Radnabe überragen, ist eine sichere Aufnahme der Felge und eine sichere Zentrierung der Felge relativ zu der Spurverbreiterungsscheibe gewährleistet, ohne dass die Felge zumindest teilweise an den ursprünglich für die Felge relevanten Zentriervorsprüngen des Zentrierelements der Radnabe anliegt.

### KURZBESCHREIBUNG DER ZEICHNUNGEN

Weitere Vorteile und Aspekte der Erfindung ergeben sich aus den Ansprüchen und aus der nachfolgenden Beschreibung einer bevorzugten Ausführungsform der Erfindung, die nachfolgend anhand der Figuren erläutert ist. Einzelmerkmale der unterschiedlichen, dargestellten und beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang beschrieben und/oder dargestellt sind. Dabei zeigen:
Fig. 1 eine isometrische Ansicht von schräg oben auf eine Spurverbreiterungsscheibe;
Fig. 2 eine isometrische Ansicht von schräg unten auf die Spurverbreiterungsscheibe aus Fig. 1;
Fig. 3 eine Seitenansicht der Spurverbreiterungsscheibe aus Fig. 1;
Fig. 4 eine Draufsicht der Spurverbreiterungsscheibe aus Fig. 1;
Fig. 5 eine Untersicht der Spurverbreiterungsscheibe der Fig. 1;
Fig. 6 eine abschnittsweise isometrische Ansicht von schräg oben auf eine Anordnung mit einer Radnabe, einer Felge und der Spurverbreiterungsscheibe aus Fig. 1;
Fig. 7 eine vergrößerte isometrische Ansicht der Anordnung gemäß Fig. 6 von schräg oben;
Fig. 8 eine Vorderansicht einer Spurverbreiterungsscheibe gemäß einer Ausführungsform der Erfindung;
Fig. 9 eine Seitenansicht der Spurverbreiterungsscheibe der Fig. 8;
Fig. 10 eine isometrische Ansicht von schräg oben auf die Spurverbreiterungsscheibe der Fig. 8 mit zwei zusätzlichen Detailvergrößerungen.

### DETAILLIERTE BESCHREIBUNG DER AUSFÜHRUNGSBEISPIELE

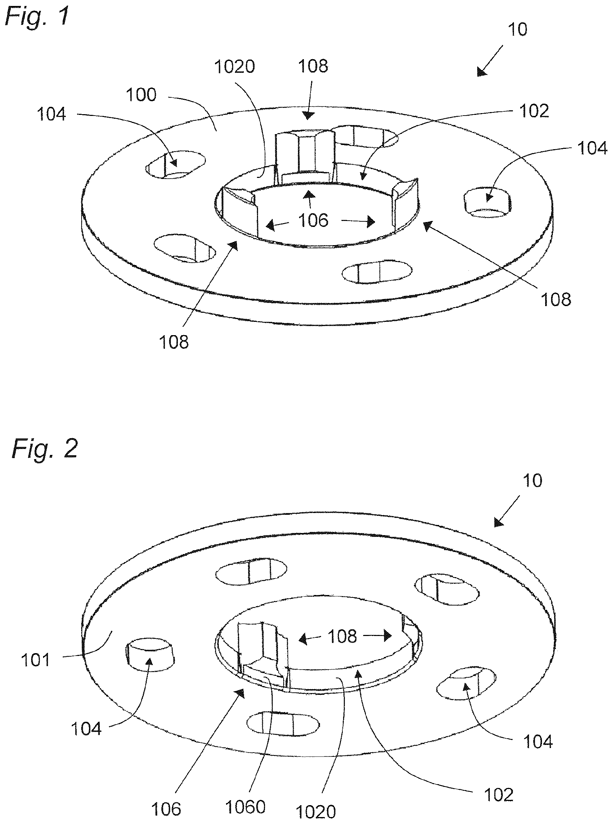

Fig. 1 zeigt eine isometrische Ansicht von schräg oben auf eine Spurverbreiterungsscheibe 10.

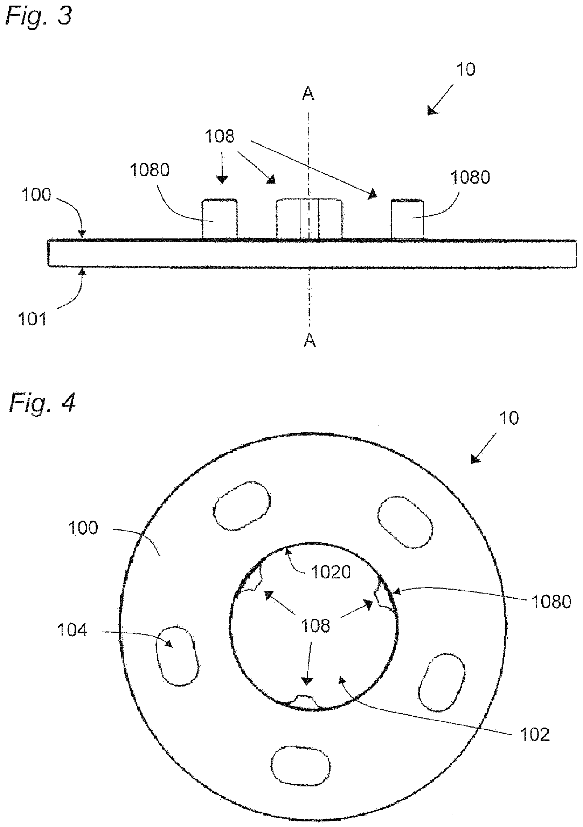

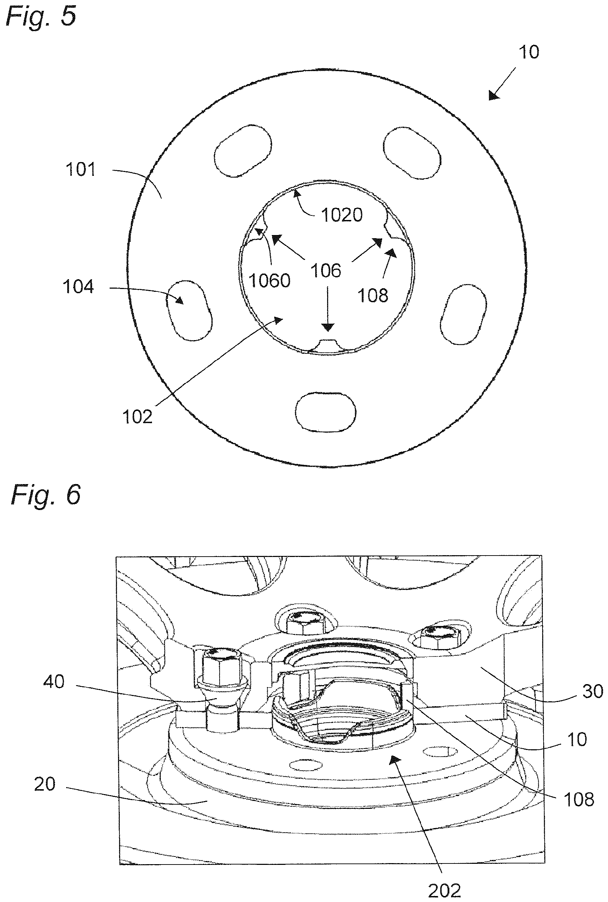

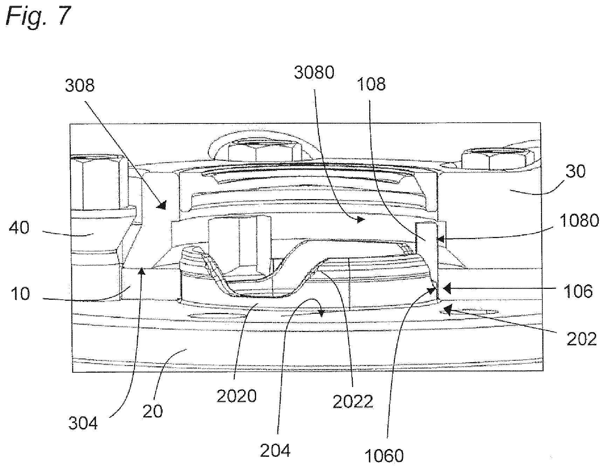

Die Spurverbreiterungsscheibe 10 weist eine Mittelöffnung 102 sowie fünf Radschraubenöffnungen 104 auf. Die Radschraubenöffnungen 104 sind als gekrümmte Langlöcher und Durchgangsöffnungen auf der Spurverbreiterungsscheibe 10 angeordnet. Weiter liegen die fünf Radschraubenöffnungen 104 auf einem Durchmesser, der zwischen einem Außendurchmesser der Spurverbreiterungsscheibe 10 und einem Durchmesser der Mittelöffnung 102 liegt. Außerdem sind drei Radnabenzentrierelemente 106 vorgesehen, die entlang einer in Fig. 3 dargestellten Mittellängsachse A der Spurverbreiterungsscheibe 10 jeweils hinter einem von drei in Fig. 1 dargestellten Felgenzentrierzapfen 108 angeordnet sind. Sowohl die drei Radnabenzentrierelemente 106 als auch die drei Felgenzentrierzapfen 108 sind an einer umlaufenden Wandung 1020 der Mittelöffnung 102 angeordnet. Genauer gesagt erstrecken sich die drei Radnabenzentrierelemente 106 und die drei Felgenzentrierzapfen 108 aus der umlaufenden Wandung 1020 der Mittelöffnung 102 heraus und verkleinern somit zumindest abschnittsweise den Durchmesser der Mittelöffnung 102. Fig. 1 zeigt weiter eine Felgenanlagefläche 100, die in einem montierten Zustand in Anlage relativ zu einer nicht dargestellten Felge steht, siehe dazu die Fig. 6 und 7. Fig. 1 zeigt außerdem, dass die Felgenzentrierzapfen 108 jeweils eine von der Mittelöffnung 102 abgewandte konvex gekrümmte Felgenzentrierfläche 1080 aufweisen.

Fig. 2 zeigt eine isometrische Ansicht von schräg unten auf die Spurverbreiterungsscheibe 10 der Fig. 1. Fig. 2 zeigt weiter im Wesentlichen die Merkmale, die bereits in Fig. 1 dargestellt und erläutert worden sind. Im Vergleich zu Fig. 1 zeigt Fig. 2 die Radnabenanlagefläche 101, die in einem montierten Zustand an einer nicht dargestellten Radnabe anliegt, siehe dazu die Fig. 6 und 7. Außerdem sind in Fig. 2 auch die Mittelöffnung 102 mit der umlaufenden Wandung 1020, die fünf Radschraubenöffnungen 104, die Radnabenzentrierelemente 106 und die Felgenzentrierzapfen 108 dargestellt. Weiter ist sichtbar, dass die Radnabenzentrierelemente 106 jeweils eine zu der Mittellängsachse der Spurverbreiterungsscheibe 10 ausgerichtete konkav gekrümmte Radnabenzentrierfläche 1060 aufweisen.

Fig. 3 zeigt eine Seitenansicht der Spurverbreiterungsscheibe 10 gemäß Fig. 1. Fig. 3 zeigt weiter im Wesentlichen die Merkmale, die bereits in den Fig. 1 und 2 dargestellt und erläutert worden sind. Es sind die drei Felgenzentrierzapfen 108 sowie die ebene Felgenanlagefläche 100, die ebene Radnabenanlagefläche 101 und die Mittellängsachse A dargestellt. Zumindest bei zwei der drei Felgenzentrierzapfen 108 sind die Felgenzentrierflächen 1080 sichtbar.

Fig. 4 zeigt eine Draufsicht der Spurverbreiterungsscheibe 10 gemäß Fig. 1. Fig. 4 zeigt weiter im Wesentlichen die Merkmale, die bereits in den Fig. 1 bis 3 dargestellt und erläutert worden sind. Es sind die Felgenanlagefläche 100, die Mittelöffnung 102 samt der umlaufenden Wandung 1020 als auch die fünf Radschraubenöffnungen 104 in Form der fünf Langlöcher dargestellt. Die in der Draufsicht dargestellten drei Felgenzentrierzapfen 108 zeigen jeweils auch die konvex gekrümmten Felgenzentrierflächen 1080.

Fig. 5 zeigt eine Untersicht der Spurverbreiterungsscheibe 10 gemäß Figur 1. Fig. 5 zeigt weiter im Wesentlichen die Merkmale, die bereits in den Fig. 1 bis 4 dargestellt und erläutert worden sind. Es sind die Radnabenanlagefläche 101, die Mittelöffnung 102 samt der umlaufenden Wandung 1020 und die als Langlöcher ausgestalteten fünf Radschraubenöffnungen 104 dargestellt. Weiter sind die Radnabenzentrierelemente mit der jeweils einen konkav gekrümmten Radnabenzentrierfläche 1060 abgebildet. Außerdem sind die Felgenzentrierzapfen 108 von einer Unterseite sichtbar, und es ist zu erkennen, dass die Felgenzentrierzapfen 108 weiter in die Mittelöffnung 102 hineinragen als die Radnabenzentrierelemente 106.

Fig. 6 zeigt einen Ausschnitt einer isometrischen Ansicht von schräg oben auf eine Anordnung mit einer Radnabe 20, einer Felge 30 und der Spurverbreiterungsscheibe 10 gemäß Fig. 1. Die Spurverbreiterungsscheibe 10 befindet sich zwischen der Radnabe 20 und der Felge 30 und liegt sowohl an der Radnabe 20 als auch an der Felge 30 an. Die Felge 30 ist mit mehreren Radschrauben 40 an der Radnabe 20 befestigt, während die Spurverbreiterungsscheibe 10 zwischen der Felge 30 und der Radnabe 20 geklemmt ist. Durch den Ausschnitt sind von den eigentlich fünf Radschrauben 40 lediglich drei Radschrauben 40 abgebildet. Weiter ist die Spurverbreiterungsscheibe 10 relativ zu dem Zentrierelement 202 der Radnabe 20 zentriert. Die Felge 30 ist weiter relativ zu der Spurverbreiterungsscheibe 10 mittels der Felgenzentrierzapfen 108 der Spurverbreiterungsscheibe 10 zentriert.

Fig. 7 zeigt eine vergrößerte isometrische Ansicht des Ausschnitts von schräg oben auf die Anordnung gemäß Fig. 6. Fig. 7 zeigt im Wesentlichen weiter die Merkmale, die bereits in der Fig. 6 beschrieben und dargestellt worden sind. Fig. 7 zeigt weiter die Radnabe 20 mit dem Zentrierelement 202 und der Anlagefläche 204 der Radnabe 20. Das Zentrierelement 202 weist einen Zentrierring 2020 und einen Zentriervorsprung 2022 auf. Das Zentrierelement 202 ist als annähernd zylindrisches Rohr ausgebildet, wobei drei Ausnehmungen in der Wandung des Rohrs vorgesehen sind, die sich von einer in Fig. 7 oberen Kante des Zentrierelements 202 aus nach unten bis zu dem umlaufenden Zentrierring 2020 erstrecken. Die Zentriervorsprünge 2022 sind daher als drei gleich lange Abschnitte ausgebildet, die in Umfangsrichtung gleichmäßig voneinander beabstandet sind. Der Zentrierring 2020 beginnt auf Höhe der Anlagefläche 204 der Radnabe 20 und erstreckt sich von der Anlagefläche 204 aus in Richtung der Mittellängsachse der Radnabe 20 nach oben. Im Bereich des Zentrierrings 2020 weist das Zentrierelement 202 einen kleineren Durchmesser auf als im Bereich der Zentriervorsprünge 2022. Die Zentriervorsprünge 2022 ragen also in radialer Richtung gegenüber dem Zentrierring 2020 vor. Die Spurverbreiterungsscheibe 10 liegt mittels der Radnabenanlagefläche 101 an der Anlagefläche der Radnabe 204 an. Außerdem befinden sich die Felgenzentrierzapfen 108 in Umfangsrichtung gesehen zwischen den Zentriervorsprüngen 2022 des Zentrierelements 202 der Radnabe 20. In der dargestellten Anordnung entlang der nicht dargestellten Mittellängsachse A unterhalb der Felgenzentrierzapfen 108 sind die Radnabenzentrierelemente 106 angeordnet. Die Radnabenzentrierelemente 106 sind mittels der Radnabenzentrierflächen 1060, an den Radnabenzentrierelementen 106 angeordnet sind, an dem Zentrierring 2020 des Zentrierelements 202 der Radnabe 20 ausgerichtet und zentriert. Das heißt, dass die Radnabenzentrierflächen 1060 an dem Zentrierring 2020 des Zentrierelements 202 der Radnabe 20 anliegen. Weiter ist die Felge 30 mittels einer Mittelbohrung 308 der Felge 30 auf den Felgenzentrierzapfen 108 zentriert. Dabei liegen die konvex gekrümmten Felgenzentrierflächen 1080 an einer ,Wandung 3080 der Mittelbohrung 308 der Felge an. Es ist weiter sichtbar, dass die Felgenzentrierzapfen 108 die Zentriervorsprünge 2022 entlang der Mittellängsachse A um ca. das Doppelte überragen. Die Radschrauben 40 fixieren die Felge 30 an der Radnabe 20 und klemmen die Spurverbreiterungsscheibe 10 zwischen der Felge 30 und der Radnabe 20 ein. Dabei liegt die Anlagefläche 204 der Radnabe 20 an der Radnabenanlagefläche 101 der Spurverbreiterungsscheibe 10 in Anlage sowie die Felgenanlagefläche 100 der Spurverbreiterungsscheibe 10 liegt an einer Anlagefläche der Felge 304 an.

Bei einer Montage der Spurverbreiterungsscheibe 10 auf die Radnabe 20 ist die Spurverbreiterungsscheibe 10 so auszurichten, dass die drei Felgenzentrierzapfen 108 der Spurverbreiterungsscheibe 10 zwischen den Zentriervorsprüngen 2022 des Zentrierelements 202 der Radnabe 20 angeordnet sind. Dann kann die der Spurverbreiterungsscheibe 10 auf das Zentrierelement 202 der Radnabe 20 aufgeschoben werden. Die Radnabenzentrierelemente 106 der Spurverbreiterungsscheibe 10 ermöglichen dann die Zentrierung der Spurverbreiterungsscheibe 10 relativ zur Radnabe 20,indem die Radnabenzentrierflächen 1060 and dem Zentrierring 2020 des Zentrierelements 202, angelegt werden.

Bei der Montage der Felge 30 auf der Spurverbreiterungsscheibe 10 ist die Felge 30 relativ zu der Spurverbreiterungsscheibe 10 so auszurichten, dass die drei Felgenzentrierzapfen 108 der Spurverbreiterungsscheibe 10 in Verlängerung zu der Mittelbohrung 308 der Felge 30 stehen. Dann kann die Felge 30 mit der Mittelbohrung 308 auf die drei Felgenzentrierzapfen 108 der Spurverbreiterungsscheibe 10 aufgeschoben werden. Die drei Felgenzentrierzapfen 108 der Spurverbreiterungsscheibe 10 ermöglichen die Zentrierung der Felge 30 auf der Spurverbreiterungsscheibe 10 mittels der drei konvex gekrümmten Felgenzentrierflächen 1080, die an der Innenwand der 308 der Felge 30 anliegen. Gegebenenfalls muss die Felge 30 dann noch um die Mittellängsachse gedreht werden, bis die Radschraubenöffnungen der Felge 30 mit den Radschraubenöffnungen der Spurverbreiterungsscheibe 10 und der Radnabe 20 fluchten.

Wenn die Radnabe mit Stehbolzen vorgesehen ist, kann dieser Schritt entfallen. Abschließend werden die Radbolzen 40 eingeschraubt.

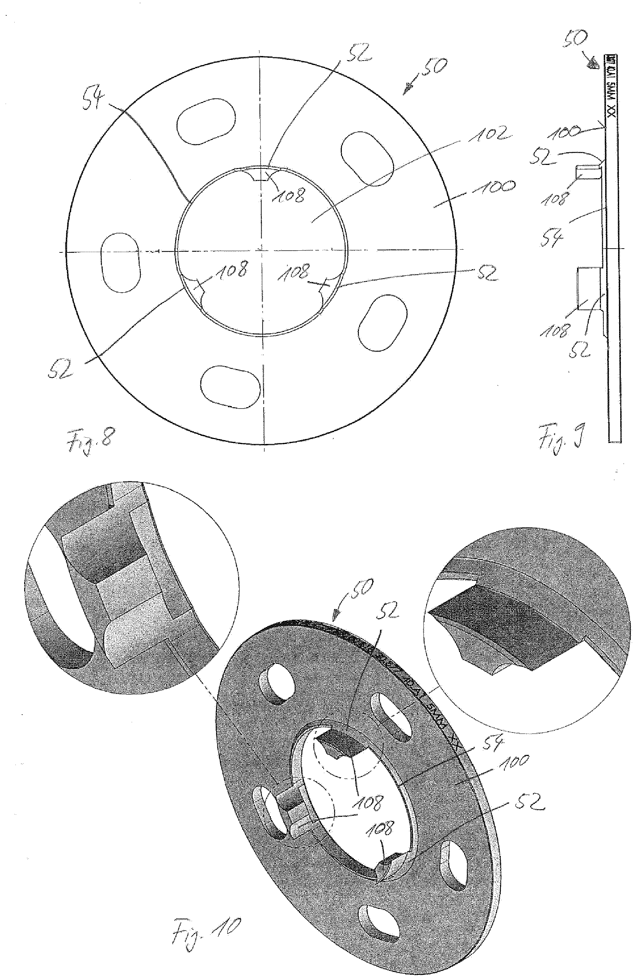

Fig. 8 zeigt eine Draufsicht auf eine Spurverbreiterungsscheibe 50 gemäß einer Ausführungsform der Erfindung. Die Spurverbreiterungsscheibe 50 unterscheidet sich nur geringfügig von der Spurverbreiterungsscheibe 10 der Fig. 1 bis 5, so dass nachfolgend nur die Unterschiede zwischen der Spurverbreitungsscheibe 50 und der Spurverbreiterungsscheibe 10 erläutert werden. Funktionsgleiche und/oder identische Bestandteile der Spurverbreiterungsscheibe 50 zur Spurverbreiterungsscheibe 10 werden mit den gleichen Bezugszeichen bezeichnet.

Die Spurverbreiterungsscheibe 50 weist am Übergang zwischen der Felgenanlagefläche 100 und den jeweils radial außen liegenden Außenflächen der Felgenzentrierzapfen 108 jeweils eine Abschrägung 52 auf. Diese Abschrägung 52 bildet eine Fase und ist beispielsweise in einem Winkel von 45° zur radial außen liegenden Außenfläche der Felgenzentrierzapfen 108 und der Felgenanlagefläche 100 ausgeführt. Die Abschrägungen 52 stabilisieren jeweils die zugehörigen Felgenzentrierzapfen 108.

Weiter ist in Fig. 8 zu erkennen, dass ein an die Mittelöffnung 102 der Spurverbreiterungsscheibe 50 unmittelbar angrenzender und um die Mittelöffnung 102 umlaufender Ringvorsprung 54 vorgesehen ist. Im Bereich der Felgenzentrierzapfen 108 geht der umlaufende Ringvorsprung 54 in die Abschrägungen 52 über. Der Ringvorsprung 54 ragt geringfügig, siehe Fig. 9, über die Felgenanlagefläche 100 der Spurverbreiterungsscheibe 50 hinaus, beispielsweise um lediglich 1 mm bis 2 mm. Dennoch stabilisiert der Ringvorsprung 54 die Spurverbreiterungsscheibe 50 deutlich. Dies ist insbesondere dann vorteilhaft, wenn die Dicke der Spurverbreiterungsscheibe 50 nur wenige Millimeter beträgt.

In Fig. 9 ist an dem in Fig. 9 oben liegenden Felgenzentrierzapfen 108 zu erkennen, dass die Abschrägung 52 sowohl zur Felgenanlagefläche 100 als auch zur radial außen liegenden Außenfläche des Felgenzentrierzapfens 108 einen Winkel von 45° einnimmt. Die Abschrägungen 52 sind etwas höher ausgeführt als der umlaufende Ringvorsprung 54.

Fig. 10 zeigt eine isometrische Ansicht der Spurverbreiterungsscheibe 50 der Fig. 8 von schräg oben. Die Ausbildung der Abschrägungen 52 zwischen der Felgenanlagefläche 100 und der jeweils radial außen liegenden Außenfläche der Felgenzentrierzapfen 108 ist Fig. 10 zu entnehmen, siehe auch die Detailvergrößerungen in Fig. 10. Weiter ist der umlaufende Ringvorsprung 54 gut zu erkennen.

## Patentansprüche

1. Spurverbreiterungsscheibe (10) für Kraftfahrzeuge mit:
- einer Mittelöffnung (102)
- mehreren Radschraubenöffnungen (104) und
- zumindest zwei Radnabenzentrierelementen (106) zum Zentrieren der Spurverbreiterungsscheibe (10) relativ zu einer Radnabe (20),
wobei zumindest zwei Felgenzentrierzapfen (108) zum Zentrieren der Spurverbreiterungsscheibe (10) relativ zu einer Felge (30) vorgesehen sind, wobei die zumindest zwei Radnabenzentrierelemente (106) an einer umlaufenden Wandung (1020) der Mittelöffnung (102) angeordnet sind, wobei
die zumindest zwei Radnabenzentrierelemente (106) zumindest abschnittsweise in die Mittelöffnung (102) der Spurverbreiterungsscheibe (10) hineinragen, und wobei ein Durchmesser der Mittelöffnung (102) größer ist als ein Durchmesser eines Zentrierelements (202) der Radnabe (20), **dadurch gekennzeichnet, dass** am Übergang zwischen einer radial außen liegenden Außenfläche der Felgenzentrierzapfen (108) und einer Felgenanlagefläche (100) der Spurverbreiterungsscheibe (50) jeweils eine Abschrägung (52) vorgesehen ist und dass ein die Mittelöffnung (102) umgebender und an die Mittelöffnung (102) angrenzender Ringvorsprung (54) vorgesehen ist, der in die Abschrägungen (52) der Felgenzentrierzapfen (108) übergeht.

2. Spurverbreiterungsscheibe (10) nach Anspruch 1, **dadurch gekennzeichnet, dass** die zumindest zwei Felgenzentrierzapfen (108) an der umlaufenden Wandung (1020) der Mittelöffnung (102) angeordnet sind und dass die zumindest zwei Felgenzentrierzapfen (108) zumindest abschnittsweise in die Mittelöffnung (102) der Spurverbreiterungsscheibe (10) hineinragen und sich entlang einer Mittellängsachse (A) der Spurverbreiterungsscheibe von der Spurverbreiterungsscheibe (10) weg erstrecken.

3. Spurverbreiterungsscheibe (10) nach Anspruch 1 oder 2, **dadurch gekennzeichnet, dass** jeweils ein Felgenzentrierzapfen (108) und ein Radnabenzentrierelement (106) in Richtung der Mittellängsachse (A) der Spurverbreiterungsscheibe (10) gesehen im Wesentlichen hintereinander angeordnet sind.

4. Spurverbreiterungsscheibe (10) nach mindestens einem der vorstehenden Ansprüche, **dadurch gekennzeichnet, dass** die zumindest zwei Radnabenzentrierelemente (106) und die zumindest zwei Felgenzentrierzapfen (108) einstückig mit der Spurverbreiterungsscheibe (10) ausgebildet sind.

5. Spurverbreiterungsscheibe (10) nach mindestens einem der vorstehenden Ansprüche, **dadurch gekennzeichnet, dass** zumindest drei Felgenzentrierzapfen (108) vorgesehen sind.

6. Spurverbreiterungsscheibe (10) nach Anspruch 5, **dadurch gekennzeichnet, dass** die zumindest drei Felgenzentrierzapfen (108) entlang eines Umfangs der Mittelöffnung (102) in gleichen Abständen verteilt, insbesondere die drei Felgenzentrierzapfen (108) um 120 Grad versetzt zueinander, angeordnet sind.

7. Spurverbreiterungsscheibe (10) nach mindestens einem der vorstehenden Ansprüche, **dadurch gekennzeichnet, dass** die Spurverbreiterungsscheibe (10) zumindest drei Radnabenzentrierelemente (106) aufweist.

8. Spurverbreiterungsscheibe (10) nach mindestens einem der vorstehenden Ansprüche, **dadurch gekennzeichnet, dass** die umlaufende Wandung (1020) der Mittelöffnung (102) parallel zu der Mittellängsachse (A) der Spurverbreiterungsscheibe (10) ausgerichtet ist.

9. Spurverbreiterungsscheibe (10) nach mindestens einem der vorstehenden Ansprüche, **dadurch gekennzeichnet, dass** die Spurverbreiterungsscheibe (10) eine Dicke entlang der Mittellängsachse (A) der Spurverbreiterungsscheibe aufweist, die kleiner als 15 mm, insbesondere 2 mm, insbesondere 3 mm, 5 mm, 8 mm oder 10 mm, insbesondere zwischen 2 mm und 15 mm, ist.

10. Anordnung mit einer Radnabe (20), einer Spurverbreiterungsscheibe (10) gemäß mindestens einem der Ansprüche 1 bis 9
und einer Felge (30) für Kraftfahrzeuge, wobei:
- die Radnabe (20) ein Zentrierelement (202) aufweist, dass sich von der Radnabe (20) aus entlang einer Mittellängsachse der Radnabe erstreckt,
- das Zentrierelement (202) einen Zentrierring (2020) und zumindest zwei Zentriervorsprünge (2022) aufweist,
- der Zentrierring (2020) auf gleicher Höhe wie eine Anlagefläche (204) der Radnabe (20) für die Spurverbreiterungsscheibe (10) beginnt, sich von der Anlagefläche (204) entlang der Mittellängsachse weg erstreckt und relativ zu der Mittellängsachse der Radnabe (20) zentriert ist,
- sich die zumindest zwei Zentriervorsprünge (2022) aus dem Zentrierring (2020) im Wesentlichen parallel zu der Mittellängsachse der Radnabe (20) erstrecken,
- das Zentrierelement (202) an den zumindest zwei Zentriervorsprüngen (2022) einen größeren Durchmesser aufweist als an dem Zentrierring (2020),
- die Spurverbreiterungsscheibe (10) relativ zu der Radnabe (20) zentriert ist,
- die Felge (30) relativ zu der Spurverbreiterungsscheibe (10) zentriert ist und
- die mehreren Radschraubenöffnungen (104) der Spurverbreiterungsscheibe fluchtend zu mehreren Radschraubenöffnungen der Felge und mehreren Radschraubenöffnungen oder Stehbolzen der Radnabe ausgerichtet sind,
**dadurch gekennzeichnet, dass**
die zumindest zwei Felgenzentrierzapfen (108) der Spurverbreiterungsscheibe (10) zwischen den zumindest zwei Zentriervorsprüngen (2022) der Radnabe (20) angeordnet sind und die Spurverbreiterungsscheibe (10) mittels der zumindest zwei Radnabenzentrierelemente (106) an dem Zentrierring (2020) anliegt.

11. Anordnung nach Anspruch 10, **dadurch gekennzeichnet, dass** das Zentrierelement (202) der Radnabe (20) zumindest drei Zentriervorsprünge (2022) aufweist, die sich über einen Umfang einer Mittelöffnung der Radnabe (20), insbesondere um 120 Grad versetzt, in gleichen Abständen verteilt aus dem Zentrierring (2020) erstrecken.

12. Anordnung nach Anspruch 10 oder 11, **dadurch gekennzeichnet, dass** die mehreren Felgenzentrierzapfen (108) der Spurverbreiterungsscheibe (10), insbesondere drei Felgenzentrierzapfen (108), zwischen den mehreren Zentriervorsprüngen (2022) der Radnabe (20) angeordnet sind.

13. Anordnung nach mindestens einem der Ansprüche 10 bis 12, **dadurch gekennzeichnet, dass** die zumindest zwei Felgenzentrierzapfen (108) der Spurverbreiterungsscheibe (10) über die zumindest zwei Zentriervorsprünge (2022) des Zentrierelements (202) der Radnabe (20) entlang der Mittellängsachse der Radnabe hinausragen.

## Claims

1. Wheel spacer disc (10) for motor vehicles, having:
- a central opening (102)
- a plurality of wheel bolt openings (104) and
- at least two wheel hub centring elements (106) for centring the wheel spacer disc (10) relative to a wheel hub (20),
wherein at least two rim centring pins (108) are provided for centring the wheel spacer disc (10) relative to a rim (30), wherein the at least two wheel hub centring elements (106) are arranged on a circumferential wall (1020) of the central opening (102), wherein
the at least two wheel hub centring elements (106) project at least in sections into the central opening (102) of the wheel spacer disc (10), and wherein a diameter of the central opening (102) is larger than a diameter of a centring element (202) of the wheel hub (20), **characterized in that** that in each case a bevel (52) is provided at the transition between a radially external outer surface of the rim centring pins (108) and a rim bearing surface (100) of the wheel spacer disc (50), and **in that** an annular projection (54) surrounding the central opening (102) and adjoining the central opening (102) is provided, said annular projection transitioning into the bevels (52) of the rim centring pins (108).

2. Wheel spacer disc (10) according to Claim 1, **characterized in that** the at least two rim centring pins (108) are arranged on the circumferential wall (1020) of the central opening (102) and **in that** the at least two rim centring pins (108) project at least in sections into the central opening (102) of the wheel spacer disc (10) and extend along a central longitudinal axis (A) of the wheel spacer disc away from the wheel spacer disc (10).

3. Wheel spacer disc (10) according to Claim 1 or 2, **characterized in that** in each case a rim centring pin (108) and a wheel hub centring element (106) are arranged substantially one behind the other, when viewed in the direction of the central longitudinal axis (A) of the wheel spacer disc (10).

4. Wheel spacer disc (10) according to at least one of the preceding claims, **characterized in that** the at least two wheel hub centring elements (106) and the at least two rim centring pins (108) are formed in one piece with the wheel spacer disc (10).

5. Wheel spacer disc (10) according to at least one of the preceding claims, **characterized in that** at least three rim centring pins (108) are provided.

6. Wheel spacer disc (10) according to Claim 5, **characterized in that** the at least three rim centring pins (108) are arranged so as to be distributed at equal spacings along a circumference of the central opening (102) and, in particular, the three rim centring pins (108) are arranged offset relative to one another by 120 degrees.

7. Wheel spacer disc (10) according to at least one of the preceding claims, **characterized in that** the wheel spacer disc (10) has at least three wheel hub centring elements (106).

8. Wheel spacer disc (10) according to at least one of the preceding claims, **characterized in that** the circumferential wall (1020) of the central opening (102) is oriented parallel to the central longitudinal axis (A) of the wheel spacer disc (10).

9. Wheel spacer disc (10) according to at least one of the preceding claims, **characterized in that** the wheel spacer disc (10) has a thickness along the central longitudinal axis (A) of the wheel spacer disc that is smaller than 15 mm, in particular 2 mm, in particular 3 mm, 5 mm, 8 mm or 10 mm, in particular between 2 mm and 15 mm.

10. Assembly having a wheel hub (20), a wheel spacer disc (10) according to at least one of Claims 1 to 9 and a rim (30) for motor vehicles, wherein:
- the wheel hub (20) has a centring element (202), which extends out from the wheel hub (20) along a central longitudinal axis of the wheel hub,
- the centring element (202) has a centring ring (2020) and at least two centring projections (2022),
- the centring ring (2020) starts at the same height as a bearing surface (204) of the wheel hub (20) for the wheel spacer disc (10), extends away from the bearing surface (204) along the central longitudinal axis and is centred relative to the central longitudinal axis of the wheel hub (20),
- the at least two centring projections (2022) extend out from the centring ring (2020) substantially parallel to the central longitudinal axis of the wheel hub (20),
- the centring element (202) has a larger diameter at the at least two centring projections (2022) than at the centring ring (2020),
- the wheel spacer disc (10) is centred relative to the wheel hub (20),
- the rim (30) is centred relative to the wheel spacer disc (10) and
- the plurality of wheel bolt openings (104) of the wheel spacer disc are oriented so as to be aligned with a plurality of wheel bolt openings of the rim and a plurality of wheel bolt openings or stud bolts of the wheel hub,
**characterized in that**
the at least two rim centring pins (108) of the wheel spacer disc (10) are arranged between the at least two centring projections (2022) of the wheel hub (20) and the wheel spacer disc (10) bears against the centring ring (2020) by means of the at least two wheel hub centring elements (106).

11. Assembly according to Claim 10, **characterized in that** the centring element (202) of the wheel hub (20) has at least three centring projections (2022), which extend from the centring ring (2020) and are distributed at equal spacings over a circumference of a central opening of the wheel hub (20) and, in particular, are offset by 120 degrees.

12. Assembly according to Claim 10 or 11, **characterized in that** the plurality of rim centring pins (108) of the wheel spacer disc (10), in particular three rim centring pins (108), are arranged between the plurality of centring projections (2022) of the wheel hub (20).

13. Assembly according to at least one of Claims 10 to 12, **characterized in that** the at least two rim centring pins (108) of the wheel spacer disc (10) project above the at least two centring projections (2022) of the centring element (202) of the wheel hub (20) along the central longitudinal axis of the wheel hub.

## Revendications

1. Disque (10) d'élargissement de voie pour véhicules automobiles avec :
- une ouverture centrale (102)
- plusieurs ouvertures (104) pour vis de roue, et
- au moins deux éléments (106) de centrage de moyeu de roue pour centrer le disque (10) d'élargissement de voie par rapport à un moyeu de roue (20),
au moins deux tenons (108) de centrage de jante étant prévus pour centrer le disque (10) d'élargissement de voie par rapport à une jante (30), lesdits au moins deux éléments (106) de centrage de moyeu de roue étant agencés sur une paroi périphérique (1020) de l'ouverture centrale (102),
lesdits au moins deux éléments (106) de centrage de moyeu de roue pénétrant au moins partiellement dans l'ouverture centrale (102) du disque (10) d'élargissement de voie, et un diamètre de l'ouverture centrale (102) étant plus grand qu'un diamètre d'un élément de centrage (202) du moyeu de roue (20), **caractérisé en ce qu'**un chanfrein (52) est prévu à la transition entre une surface extérieure, située radialement à l'extérieur, des tenons (108) de centrage de jante et une surface d'appui de jante (100) du disque (50) d'élargissement de voie, et **en ce qu'**il est prévu une saillie annulaire (54) entourant l'ouverture centrale (102) et adjacente à l'ouverture centrale (102), qui se prolonge par les chanfreins (52) des tenons (108) de centrage de jante.

2. Disque (10) d'élargissement de voie selon la revendication 1, **caractérisé en ce que** lesdits au moins deux tenons (108) de centrage de jante sont agencés sur la paroi périphérique (1020) de l'ouverture centrale (102) et **en ce que** lesdits au moins deux tenons (108) de centrage de jante pénètrent au moins partiellement dans l'ouverture centrale (102) du disque (10) d'élargissement de voie et s'éloignent du disque (10) d'élargissement de voie le long d'un axe longitudinal central (A) du disque d'élargissement de voie.

3. Disque (10) d'élargissement de voie selon la revendication 1 ou la revendication 2, **caractérisé en ce que** respectivement un tenon (108) de centrage de jante et un élément (106) de centrage de moyeu de roue sont agencés sensiblement l'un derrière l'autre, vu dans la direction de l'axe longitudinal central (A) du disque (10) d'élargissement de voie.

4. Disque (10) d'élargissement de voie selon au moins l'une des revendications précédentes, **caractérisé en ce que** lesdits au moins deux éléments (106) de centrage de moyeu de roue et lesdits au moins deux tenons (108) de centrage de jante sont formés d'une seule pièce avec le disque (10) d'élargissement de voie.

5. Disque (10) d'élargissement de voie selon au moins l'une des revendications précédentes, **caractérisé en ce qu'**il est prévu au moins trois tenons (108) de centrage de jante.

6. Disque (10) d'élargissement de voie selon la revendication 5, **caractérisé en ce que** lesdits au moins trois tenons (108) de centrage de jante sont répartis à intervalles égaux le long d'une périphérie de l'ouverture centrale (102), en particulier les trois tenons (108) de centrage de jante sont décalés de 120 degrés les uns par rapport aux autres.

7. Disque (10) d'élargissement de voie selon au moins l'une des revendications précédentes, **caractérisé en ce que** le disque (10) d'élargissement de voie présente au moins trois éléments (106) de centrage de moyeu de roue.

8. Disque (10) d'élargissement de voie selon au moins l'une des revendications précédentes, **caractérisé en ce que** la paroi périphérique (1020) de l'ouverture centrale (102) est orientée parallèlement à l'axe longitudinal central (A) du disque (10) d'élargissement de voie.

9. Disque (10) d'élargissement de voie selon au moins l'une des revendications précédentes, **caractérisé en ce que** le disque (10) d'élargissement de voie présente une épaisseur selon l'axe longitudinal central (A) du disque d'élargissement de voie qui est inférieure à 15 mm, en particulier 2 mm, en particulier 3 mm, 5 mm, 8 mm ou 10 mm, en particulier comprise entre 2 mm et 15 mm.

10. Agencement comprenant un moyeu de roue (20), un disque (10) d'élargissement de voie selon au moins l'une des revendications 1 à 9
et une jante (30) pour véhicules automobiles, dans lequel :
- le moyeu de roue (20) présente un élément de centrage (202) qui s'étend à partir du moyeu de roue (20) le long d'un axe longitudinal central du moyeu de roue,
- l'élément de centrage (202) comprend un anneau de centrage (2020) et au moins deux saillies de centrage (2022),
- l'anneau de centrage (2020) commence à la même hauteur qu'une surface d'appui (204) du moyeu de roue (20) pour le disque (10) d'élargissement de voie, s'étend depuis la surface d'appui (204) le long de l'axe longitudinal central et est centré par rapport à l'axe longitudinal central du moyeu de roue (20),
- lesdits au moins deux saillies de centrage (2022) s'étendent à partir de l'anneau de centrage (2020) sensiblement parallèlement à l'axe longitudinal central du moyeu de roue (20),
- l'élément de centrage (202) présente un diamètre plus grand sur lesdits au moins deux saillies de centrage (2022) que sur l'anneau de centrage (2020),
- le disque (10) d'élargissement de voie est centré par rapport au moyeu de roue (20),
- la jante (30) est centrée par rapport au disque (10) d'élargissement de voie, et
- les ouvertures de la pluralité d'ouvertures (104) pour vis de roue du disque d'élargissement de voie sont alignées avec les ouvertures de la pluralité d'ouvertures de vis de roue de la jante et les ouvertures de la pluralité d'ouvertures de vis de roue ou de goujons du moyeu de roue,
**caractérisé en ce que**
lesdits au moins deux tenons (108) de centrage de jante du disque (10) d'élargissement de voie sont agencés entre lesdits au moins deux saillies de centrage (2022) du moyeu de roue (20) et le disque (10) d'élargissement de voie s'applique contre l'anneau de centrage (2020) au moyen desdits au moins deux éléments (106) de centrage de moyeu de roue.

11. Agencement selon la revendication 10, **caractérisé en ce que** l'élément de centrage (202) du moyeu de roue (20) présente au moins trois saillies de centrage (2022) qui s'étendent depuis l'anneau de centrage (2020), sur une périphérie d'une ouverture centrale du moyeu de roue (20), réparties à intervalles égaux, en particulier décalées de 120 degrés.

12. Agencement selon la revendication 10 ou la revendication 11, **caractérisé en ce que** les tenons de la pluralité de tenons (108) de centrage de jante du disque (10) d'élargissement de voie, en particulier trois tenons (108) de centrage de jante, sont agencés entre les saillies de la pluralité de saillies de centrage (2022) du moyeu de roue (20).

13. Agencement selon au moins l'une des revendications 10 à 12, **caractérisé en ce que** lesdits au moins deux tenons (108) de centrage de jante du disque (10) d'élargissement de voie dépassent desdits au moins deux saillies de centrage (2022) de l'élément de centrage (202) du moyeu de roue (20) le long de l'axe longitudinal central du moyeu de roue.
